# EUROPEAN PATENT SPECIFICATION

(11) **EP 1 506 977 B1**
(45) Date of publication and mention of the grant of the patent: **27.12.2006**
(21) Application number: 04254650.7
(22) Date of filing: 02.08.2004
(51) Int. Cl.: C08J 3/24, C09J 129/02, C09J 133/00, C08G 81/02

(54) **Curable composition and use as binder**
Härtbare Zusammensetzung und ihre Verwendung als Bindemittel
Composition durcissable et leur utilisation comme liant

(30) Priority: 13.08.2003 US 494877 P
(43) Date of publication of application: 16.02.2005
(73) Proprietor: ROHM AND HAAS COMPANY, Philadelphia, Pennsylvania 19106-2399 (US)
(72) Inventor: Blankenship, Robert Mitchell, Harleysville, Pennsylvania 19438 (US); Bromm, Karl Allen, Forest Grove, Pennsylvania 18922 (US); Gappert, Griffin Melaney, Philadelphia, Pennsylvania 19147 (US); Tang, Xun, Dresher, Pennsylvania 19025 (US); Weinstein, Barry, Dresher, Pennsylvania 19025 (US)
(74) Representative: Kent, Venetia Katherine

(56) References cited:
- EP-A- 0 781 797
- US-A- 5 427 587
- US-A- 5 661 213

## Description

This invention relates to a curable composition and the use thereof in a method for treating substrates. In particular the curable composition includes a polymer including, as copolymerized units, a monomer bearing carboxylic acid groups, anhydride groups, or salts thereof, and a hydroxyl group-bearing monomer of Formula I,

CH2=C(R1)CH(R2)OR3 (I)

wherein R1 and R2 are independently selected from hydrogen, methyl, and - CH2OH; and R3 is selected from hydrogen, -CH2CH(CH3)OH, -CH2CH2OH and (C3-C12) polyol residues; or of Formula II, 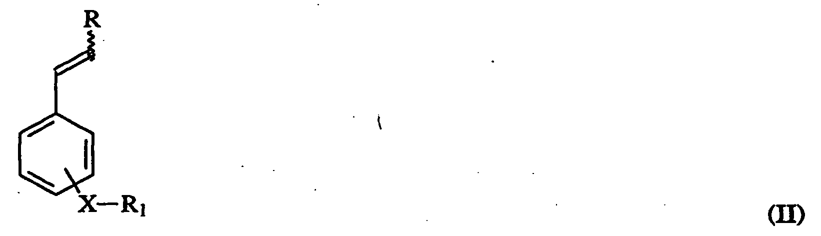 wherein R is selected from CH3, C1, Br, and C6H5; and R1 is selected from H, OH, CH2OH, CH(CH3)OH, glycidyl, CH(OH)CH2OH, and (C3-C12)polyol residues;
wherein the ratio of the number of equivalents of the carboxylic acid groups, anhydride groups, or salts thereof to the number of equivalents of the hydroxyl groups is from about 1/0.01 to about 1/3, and wherein the carboxylic acid groups, anhydride groups, or salts thereof are neutralized to an extent of less than about 35% with a fixed base. A method for treating a substrate with the curable composition is also provided. In some embodiments of the method for treating a substrate the curable composition can be used as a binder for a coating, as a binder for a cellulosic substrate such as, for example, paper filters and consolidated wood products, and as a binder for a nonwoven such as, for example, nylon interlinings, polyester fiberfill, and fiberglass insulation.

There has long been a need for a curable composition, particularly for a composition which contains or emits, on storage or during curing, for example, little or, preferably, no formaldehyde while providing an effective level of curing at a temperature and for a time acceptable for the substrate to be treated and consistent with the lowest practical level of energy usage during processing.

U.S. Patents No. 5,427,587 and 5,661,213 disclose a formaldehyde-free curable composition and the use thereof as a binder for heat-resistant nonwovens and cellulosic substrates. The composition includes (a) a polyacid bearing at least two carboxylic acid groups, anhydride groups, or the salts thereof; (b) a polyol bearing at least two hydroxyl groups; and (c) a phosphorous-containing accelerator, wherein the ratio of the number of equivalents of the carboxylic acid groups, anhydride groups, or salts thereof to the number of equivalents of the hydroxyl groups is from about 1/0.01 to about 1/3, and wherein the carboxyl groups, anhydride groups, or salts thereof are neutralized to an extent of less than about 35% with a fixed base.

More facile cure is still desirable; such can be manifested by either more rapid cure at a fixed set of cure conditions (time, temperature) or equal cure at lower temperature, shorter time, or with lowered amounts or no cure catalyst relative to previous compositions. The compositions of the present invention provide such a facile cure.

According to a first aspect of the present invention there is provided a curable composition comprising a polymer comprising, as copolymerized units, a monomer comprising carboxylic acid groups, anhydride groups, or salts thereof, and a hydroxyl group-comprising monomer of Formula I, a polymer comprising, as copolymerized units, a monomer comprising carboxylic acid groups, anhydride groups, or salts thereof, and a hydroxyl group-comprising monomer of Formula I,

CH2=C(R1)CH(R2)OR3 (I)

CH2OH; and R3 is selected from hydrogen, CH2CH(CH3)OH, -CH2CH2OH and (C3-C12) polyol residues; or of Formula II, 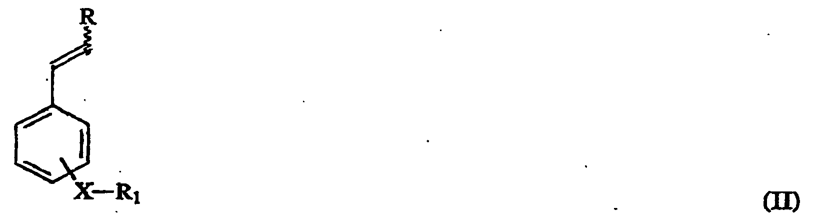 wherein R is selected from CH3, Cl, Br, and C6H5; and R1 is selected from H, OH, CH2OH, CH(CH3)OH, glycidyl, CH(OH)CH2OH, and (C3-C12)polyol residues;
wherein the ratio of the number of equivalents of said carboxylic acid groups, anhydride groups, or salts thereof to the number of equivalents of said hydroxyl groups is from about 1/0.01 to about 1/3, and wherein said carboxylic acid groups, anhydride groups, or salts thereof are neutralized to an extent of less than about 35% with a fixed base
and wherein the curable composition additionally contains components chosen from polyols which are not polymers as defined above, emulsifiers, surfactants, organosilanes, corrosion inhibitors effective at pH <4 and waxes.

According to a second aspect of the present invention there is provided a method for treating a substrate comprising: (a) forming the curable composition of the first aspect of the present invention; (b) contacting said substrate with said curable composition; and (c) heating said curable composition at temperature of from about 100 °C. to about 400 °C.

According to a third aspect of the present invention there is provided a substrate bearing the cured composition of the first apect of the present invention.

The curable composition of the present invention includes a polymer including, as copolymerized units, a monomer comprising carboxylic acid groups, anhydride groups, or salts thereof, and a hydroxyl group-including monomer of Formula I,
a polymer comprising, as copolymerized units, a monomer comprising carboxylic acid groups, anhydride groups, or salts thereof, and a hydroxyl group-comprising monomer of Formula I,

CH2=C(R1)CH(R2)OR3 (I)

wherein R1 and R2 are independently selected from hydrogen, methyl, and - CH2OH; and R3 is selected from hydrogen, -CH2CH(CH3)OH, -CH2CH2OH and (C3-C12) polyol residues; or of Formula II, 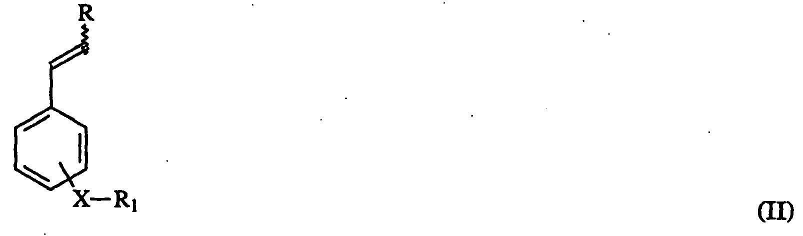 wherein R is selected from CH3, Cl, Br, and C6H5; and R1 is selected from H, OH, CH2OH, CH(CH3)OH, glycidyl, CH(OH)CH2OH, and (C3-C12)polyol residues. This polymer herein is referred to as "the polymer of the present invention".

The polymer of the present invention includes, as copolymerized units, a monomer including carboxylic acid groups, anhydride groups, or salts. The polymer is preferably an addition polymer. A carboxylic acid monomer such as, for example, methacrylic acid, acrylic acid, crotonic acid, fumaric acid, maleic acid, 2-methyl maleic acid, itaconic acid, citraconic acid, mesaconic acid, cyclohexenedicarboxylic acid, 2-methyl itaconic acid, α-methylene glutaric acid, monoalkyl maleates, and monoalkyl fumarates, and salts thereof; and ethylenically unsaturated anhydrides such as, for example, maleic anhydride, itaconic anhydride, acrylic anhydride, and methacrylic anhydride; preferably at a level of from 1% to 99%, more preferably at a level of from 10% to 90% by weight, based on the weight of the polymer, can be used. Preferred monomers including carboxylic acid groups, anhydride groups, or salts are acrylic acid and maleic acid, and salts thereof, and maleic anhydride.

In certain embodiments the polymer of the present invention includes, as copolymerized units, a hydroxyl group-including monomer of Formula I,

CH2=C(R1)CH(R2)OR3 (I)

wherein R1 and R2 are independently selected from hydrogen, methyl, and - CH2OH; and R3 is selected from hydrogen, -CH2CH(CH3)OH, -CH2CH2OH and (C3-C12) polyol residues; or of Formula II, 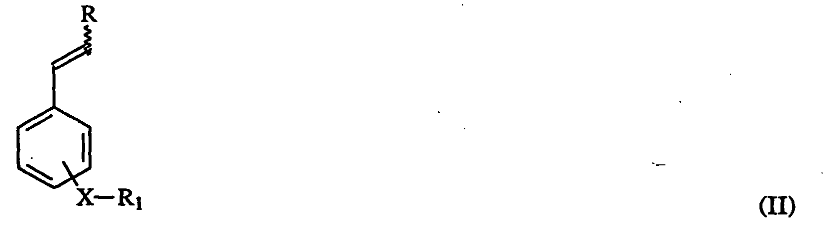 wherein R is selected from CH3, Cl, Br, and C6H5; and R1 is selected from H, OH, CH2OH, CH(CH3)OH, glycidyl, CH(OH)CH2OH, and (C3-C12)polyol residues; preferably at a level of from 1% to 99%, more preferably at a level of from 10% to 90% by weight, based on the weight of the polymer. Preferred hydroxyl group-containing monomers are allyl alcohol and 3-allyloxy-1,2-propanediol. Monomers of Formula I and Formula II can be prepared by a variety of synthetic routes known to those skilled the art. For example, allyl chloride can be reacted with various polyhydroxy compounds to give, for example, the corresponding allyloxy derivatives of sugars, glycerine, erythritol and pentaerythritol. Alternatively, allyl alcohol can be reacted with various halomethyl derivatives, especially chloromethyl compounds, to prepare allyloxy derivatives; for example, the reaction of allyl alcohol with epichlorohydrin would produce 3-allyloxy-1,2-propanediol. Vinyl glycols, such as 1-butene-3,4-diol, for example, can be prepared by methods such as those described in U.S. 5,336,815. Allyloxy compounds that would hydrolyze to allyloxy compounds of Formula I under the conditions of aqueous polymerization, for example allyl glycidylether, are also useful as monomers to produce polymer additives of the present invention.

The (C₃-C₁₂)-containing polyols useful to prepare allyloxy compounds of Formula I include, for example, (C₃-C₆)-polyhydroxy compounds such as erythritol, pentaerythritol and glycerine; and sugar alcohols such as xylitol, sorbitol and mannitol. Additional suitable (C₃-C₁₂)-containing polyols include, for example, polyhydroxy aldehyde and ketone sugars such as glucose, fructose, galactose, maltose, sucrose, lactose, erythrose and threose. Examples of suitable unsaturated non-ionizable monomers, including representative examples of monomers based on (C₃-C₁₂)-containing polyols (compounds [5], [6], [7], [8], [9] and [10]; see R³ groups) are presented in Table I. The prefixes "(C₃-C₁₂)-" and "(C₃-C₆)-," as used herein, refer to organic compounds or structural portions of organic compounds containing 3 to 12 carbon atoms and 3 to 6 carbon atoms, respectively. The terms "polyol" and "polyhydroxy," as used herein, refer to organic compounds or structural portions of organic compounds containing two or more hydroxy groups.

**Table I**

| Formula I Monomer | R¹ | R² | R³ |
|---|---|---|---|
| allyl alcohol [1] | -H | -H | -H |
| methallyl alcohol [2] | -CH₃ | -H | -H |
| allyloxyethanol [3] | -H | -H | -CH₂CH₂OH |
| allyloxypropanol [4] | -H | -H | -CH₂CH(CH₃)OH |
| 3-allyloxy-1,2-propanediol [5] | -H | -H | -CH₂CH(OH)CH₂OH |
| allyloxy(sugar) [6] | -H | -H | -sugar residue |
| allyloxy(glucose) [7] | -H | -H | -CH₂[CH(OH)]₄C(=O)H |
| allyloxy(fructose) [8] | -H | -H | -CH₂[CH(OH)]₃C(=O)CH₂OH |
| erythritol monoallyl ether [9] | -H | -H | -CH₂[CH(OH)]₂CH₂OH |
| pentaerythritol monoallyl ether [10] | -H | -H | -CH₂C(CH₂OH)₃ |
| 1-butene-3,4-diol [11] | -H | -CH₂OH | -H |

The polymer of the present invention can optionally include, as copolymerized units, monomers other than monomers including carboxylic acid groups, anhydride groups, or salts and hydroxyl group-containing monomers of Formula I or Formula II such as, for example, acrylic ester monomers including methyl acrylate, ethyl acrylate, butyl acrylate, 2-ethylhexyl acrylate, decyl acrylate, methyl methacrylate, butyl methacrylate, isodecyl methacrylate, hydroxyethyl acrylate, hydroxyethyl methacrylate, and hydroxypropyl methacrylate; acrylamide or substituted acrylamides; styrene; butadiene; vinyl acetate or other vinyl esters; acrylonitrile or methacrylonitrile; and the like.

In a preferred embodiment the curable composition is a curable aqueous composition. "Aqueous" herein includes water and mixtures of water and water-miscible solvents, wherein water is at least 50% by weight of the non-polymeric portion of the curable composition. In other embodiments the curable composition can be a solid composition such as, for example, a powder or a film. The polymer of the present invention can be in the form of a solution of the polymer in an aqueous medium such as, for example, an alkali-soluble polymer which has been solubilized in a basic medium; in the form of an aqueous dispersion such as, for example, an emulsion-polymerized dispersion; or in the form of an aqueous suspension.

The polymer containing at least two carboxylic acid groups, anhydride groups, or salts thereof can have a weight average molecular weight, as measured by aqueous GPC, of from 300 to 10,000,000. Preferred is a weight average molecular weight from 500 to 250,000; more preferred is a weight average molecular weight of 500 to 20,000. When the polymer is an alkali-soluble polymer having a carboxylic acid, anhydride, or salt thereof, content of from 5% to 50%, by weight based on the weight of the polymer, a molecular weight from 500 to 20,000 is preferred, because higher molecular weight alkali-soluble resins lead to curable compositions that exhibit excessive viscosity.

When the polymer is in the form of an aqueous dispersion or an aqueous suspension and low levels of precrosslinking or gel content are desired, low levels of copolymerized multi-ethylenically unsaturated monomers such as, for example, allyl methacrylate, diallyl phthalate, 1,4-butylene glycol dimethacrylate, 1,6-hexanedioldiacrylate, and the like, can be used at a level of from about 0.01% to about 5 %, by weight based on the weight of the polymer.

When the polymer is in the form of an aqueous dispersion the average diameter of the polymer particles can be from 80 nanometers to 1000 nanometers, as measured using a Brookhaven BI-90 Particle Sizer, which employs a light scattering technique. However, polymodal particle size distributions such as those disclosed in US Patent Nos. 4,384,056 and 4,539,361, hereby incorporated herein by reference, can be employed.
When the polymer is in the form of an aqueous dispersion the addition polymer particles can be made up of two or more mutually incompatible copolymers. These mutually incompatible copolymers can be present in various morphological configurations such as, for example, core/shell particles, core/shell particles with shell phases incompletely encapsulating the core, core/shell particles with a multiplicity of cores, interpenetrating network particles, and the like.

The polymer of the present invention can be prepared by solution polymerization, emulsion polymerization, or suspension polymerization techniques for polymerizing ethylenically-unsaturated monomers which are well known in the art. When it is desired to use emulsion polymerization, anionic or nonionic surfactants, or mixtures thereof, can be used. The polymerization can be carried out by various means such as, for example, with all of the monomer in the reaction kettle at the beginning of the polymerization reaction, with a portion of the monomer in emulsified form present in the reaction kettle at the beginning of the polymerization reaction, and with a small particle size emulsion polymer seed present in the reaction kettle at the beginning of the polymerization reaction.

The polymerization reaction to prepare the polymer can be initiated by various methods known in the art such as, for example, by using the thermal decomposition of an initiator and by using an oxidation-reduction reaction ("redox reaction") to generate free radicals to effect the polymerization. In another embodiment the addition polymer can be formed in the presence of phosphorous-containing chain transfer agents such as, for example, hypophosphorous acid and its salts, as is disclosed in U.S. Patent No. 5,294,686, so as to incorporate the optional phosphorous-containing species in the polymer molecule. The polymer can be prepared in solvent/water mixtures such as, for example, i-propanol/water, tetrahydrofuran/water, and dioxane/water.

Chain transfer agents such as mercaptans, polymercaptans, and halogen compounds can be used in the polymerization mixture in order to moderate the molecular weight of the acrylic emulsion copolymer. Generally, from 0% to about 1% by weight, based on the weight of the polymeric binder, of C4 - C20 alkyl mercaptans, mercaptopropionic acid, or esters of mercaptopropionic acid, can be used.

The carboxyl groups of the polymer component of the curable composition are neutralized with fixed base to an extent of less than 35%, calculated on an equivalents basis. Contacting the addition polymer component before, during, or after the preparation of the curable composition, the polymer containing two carboxylic acid groups, anhydride groups, or the salts thereof, defined as neutralization herein, with a fixed base is required prior to or while treating a substrate. Neutralization of less than 20% of the carboxylic acid groups, calculated on an equivalents basis, with a fixed base is preferred. Neutralization of less than 5% of the carboxylic acid groups, calculated on an equivalents basis, with a fixed base is more preferred. When the half ester of a dicarboxylic acid or the anhydride of a dicarboxylic acid is used, the equivalents of acid are calculated to be equal to those of the corresponding dicarboxylic acid.

"Fixed base", or "permanent base", as used herein, refers to a monovalent base which is substantially non-volatile under the conditions of the treatment such as, for example, sodium hydroxide, potassium hydroxide, sodium carbonate, or t-butylammonium hydroxide. The fixed base must be sufficiently nonvolatile that it will substantially remain in the composition during heating and curing operations. Volatile bases such as, for example, ammonia or volatile lower alkyl amines, do not function as the fixed base of this invention, but can be used in addition to the fixed base; they do not contribute to the required degree of neutralization by a fixed base as specified herein. Fixed multivalent bases such as, for example, calcium carbonate may tend to destabilize an aqueous dispersion, if the addition polymer is used in the form of an aqueous dispersion, but can be used in minor amount.

The ratio of the number of equivalents of carboxy, anhydride, or salts thereof of the polyacid to the number of equivalents of hydroxyl in the polyol is from about 1/0.01 to about 1/3. An excess of equivalents of carboxy, anhydride, or salts thereof of the polyacid to the equivalents of hydroxyl in the polyol is preferred. The more preferred ratio of the number of equivalents of carboxy, anhydride, or salts thereof in the polyacid to the number of equivalents of hydroxyl in the polyol is from about 1/0.2 to about 1/1. The most preferred ratio of the number of equivalents of carboxy, anhydride, or salts thereof in the polyacid to the number of equivalents of hydroxyl in the polyol is from about 1/0.2 to about 1/0.8.

In certain embodiments the curable composition can include a Phosphorous-containing species which can be a Phosphorous-containing compound such as, for example, an alkali metal hypophosphite salt, an alkali metal phosphite, an alkali metal polyphosphate, an alkali metal dihydrogen phosphate, a polyphosphoric acid, and an alkyl phosphinic acid or it can be an oligomer or polymer bearing Phosphorous-containing groups such as, for example, an addition polymer of acrylic and/or maleic acid formed in the presence of sodium hypophosphite, addition polymers such as, for example, the polymer of the present invention prepared from ethylenically unsaturated monomers in the presence of phosphorous salt chain transfer agents or terminators, and addition polymers containing acid-functional monomer residues such as, for example, copolymerized phosphoethyl methacrylate, and like phosphonic acid esters, and copolymerized vinyl sulfonic acid monomers, and their salts. The phosphorous-containing species can be used at a level of from 0% to 40%, preferably from 0% to 5%, further preferably from 0% to 2.5%, more preferably from 0% to 1%, and further more preferably from 0% to 0.5% by weight based on the weight of the polymer of the present invention.

The curable composition can contain, in addition, conventional treatment components such as, for example, emulsifiers, pigments, fillers or extenders, anti-migration aids, curing agents, coalescents, surfactants, particularly nonionic surfactants, biocides, plasticizers, organosilanes, anti-foaming agents, corrosion inhibitors, particularly corrosion inhibitors effective at pH<4 such as thioureas, oxalates, and chromates, colorants, waxes, polyols which are not polymers of the present invention such as glycerol, alkanolamines, and polypropyleneglycol, other polymers not of the present invention, and antioxidants.

In some embodiments alkanolamines are included in the curable composition. In certain embodiments the salts of the carboxy-group are salts of functional alkanolamines with at least two hydroxyl groups such as, for example, diethanolamine, triethanolamine, dipropanolamine, and di-isopropanolamine. Other embodiments will be apparent to one skilled in the art. As disclosed herein-above, the carboxyl groups of the polymer can be neutralized to an extent of less than about 35% with a fixed base before, during, or after the mixing to provide the aqueous composition. Neutralization can be partially effected during the formation of the polymer.

The curable composition of the present invention is preferably a formaldehyde-free curable composition. By "formaldehyde-free composition" herein is meant that the composition is substantially free from formaldehyde, nor does it liberate substantial formaldehyde as a result of drying and/or curing. In order to minimize the formaldehyde content of the curable composition it is preferred, when preparing a polymer of the present invention, to use polymerization adjuncts such as, for example, initiators, reducing agents, chain transfer agents, biocides, surfactants, and the like, which are themselves free from formaldehyde, do not generate formaldehyde during the polymerization process, and do not generate or emit formaldehyde during the treatment of a substrate. By "substantially free from formaldehyde" herein is meant that when low levels of formaldehyde are acceptable in the waterborne composition or when compelling reasons exist for using adjuncts which generate or emit formaldehyde, substantially formaldehyde-free waterborne compositions can be used.

In one aspect of the present invention a method for treating a substrate is provided. Such treatments can be commonly described as, for example, coating a substrate, sizing a substrate, saturating a substrate, bonding a substrate, and the like. Typical substrates include wood such as wood particles, fibers, chips, flour, pulp, and flakes; metal; plastic; fibers; woven and nonwoven fabrics; and the like. The curable composition can be applied to a substrate by conventional techniques such as, for example, air or airless spraying, padding, saturating, roll coating, curtain coating, beater deposition, coagulation, or the like.

In one embodiment of this invention the curable composition can be used as a binder for heat-resistant nonwoven fabrics such as, for example, nonwovens which contain heat-resistant fibers such as, for example, aramid fibers, ceramic fibers, metal fibers, carbon fibers, polyimide fibers, certain polyester fibers, rayon fibers, rock wool, and glass fibers. By "heat-resistant fibers" herein is meant fibers which are substantially unaffected by exposure to temperatures above 125°C. Heat-resistant nonwovens can also contain fibers which are not in themselves heat-resistant such as, for example, certain polyester fibers, rayon fibers, nylon fibers, and superabsorbent fibers, in so far as they do not materially adversely affect the performance of the substrate.

Nonwoven fabrics are composed of fibers which can be consolidated by purely mechanical means such as, for example, by entanglement caused by needle-punching, by an air-laid process, and by a wet-laid process; by chemicals means such as, for example, treatment with a polymeric binder; or by a combination of mechanical and chemical means before, during, or after nonwoven fabric formation. Some nonwoven fabrics are used at temperatures substantially higher than ambient temperature such as, for example, glass fiber-containing nonwoven fabrics which are impregnated with a hot asphaltic composition pursuant to making roofing shingles or roll roofing material. When a nonwoven fabric is contacted with a hot asphaltic composition at temperatures of from 150°C to 250°C, the nonwoven fabric can sag, shrink, or otherwise become distorted. Therefore, nonwoven fabrics which incorporate a curable composition should substantially retain the properties contributed by the cured aqueous composition such as, for example, tensile strength. In addition, the cured composition should not substantially detract from essential nonwoven fabric characteristics, as would be the case, for example, if the cured composition were too rigid or brittle or became sticky under processing conditions.

The curable composition, after it is applied to a substrate, is heated to effect drying and curing. The duration and temperature of heating will affect the rate of drying, processability and handleability, and property development of the treated substrate. Heat treatment at from 120 °C to 400 °C for a period of time between from 3 seconds to 15 minutes can be carried out; treatment at from 175 °C to 225 °C. is preferred. By "curing" is meant herein a chemical or morphological change which is sufficient to alter the properties of the polymer such as, for example, via covalent chemical reaction, ionic interaction or clustering, improved adhesion to the substrate, phase transformation or inversion, hydrogen bonding, and the like. The drying and curing functions can be effected in two or more distinct steps, if desired. For example, the composition can be first heated at a temperature and for a time sufficient to substantially dry but not to substantially cure the composition and then heated for a second time at a higher temperature and/or for a longer period of time to effect curing. Such a procedure, referred to as "B-staging", can be used to provide binder-treated nonwoven, for example, in roll form, which can at a later stage be cured, with or without forming or molding into a particular configuration, concurrent with the curing process.

The heat-resistant nonwovens can be used for applications such as, for example, insulation batts or rolls, as reinforcing mat for roofing or flooring applications, as roving, as microglass-based substrate for printed circuit boards or battery separators, as filter stock, as tape stock, and as reinforcement scrim in cementitious and non-cementitious coatings for masonry.

The following examples are intended to illustrate the curable composition and the use thereof in the method for treating substrates.

**List of Abbreviations:**

| Common Name | Abbreviation |
|---|---|
| Hydroxyethyl acrylate | HEA |
| Sodium metabisulfite | SMBS |
| Maleic Anhydride | MAn |
| Maleic Acid | MAc |
| Sodium Hydroxide | NaOH |
| 3-Allyloxy-1,2-propanediol | Allyl-OOP |
| Gel Permeation Chromatography | GPC |
| High performance liquid chromatography | HPLC |
| Acrylic acid | AA |
| Number average molecular weight | Mn |
| Weight average molecular weight | Mw |
| Sodium persulfate | NaPS |
| 45% Sodium hypophosphite in water | SHP |
| Deionized water | H₂O |

### EXAMPLES 1-2. Preparation of curable compositions

Poly(AA/Allyl-OOP) copolymers were prepared in a 1-liter round bottom flask with four neck equipped with a mechanical stirrer, condenser, temperature control device, initiator feed lines and a nitrogen inlet. The specific amounts of kettle ingredients are in Table 1.1, lines A to C. The kettle mixture was heated to 90°C while stirring under a nitrogen purge. Upon reaching 90°C temperature, ingredients (D), (E), and (F) were introduced into the reaction flask with stirring. Ingredients (G), mixture (H) and (1), and initiator mixture (J and K) were all cofed separately over a 120 minute period. The reaction was allowed to run at 93°C. Upon completion of the feeds, the reaction mixture was maintained at the reaction temperature for 15 minutes. The resulting copolymer was characterized for conversion by HPLC, and molecular weight by aqueous GPC. Characterization data is in Table 1.2.

**Table 1.1- Polymerization Ingredients vfor Examples 1-2**

| | Ingredients | Example 1 | Example 2 |
|---|---|---|---|
| A | H₂O¹ | 280g | 280g |
| B | SHP² | 7.3g | 9.5g |
| C | Allyl-OOP | 133.3g | 133.3g |
| D | AA | 18g | 18g |
| E | NaPS³ | 1g | 1g |
| F | H₂O¹ | 5g | 5g |
| G | AA | 182g | 182g |
| H | SHP^{2,4} | 22.2g | 29g |
| I | H₂O¹ | 13.8g | 13.8g |
| J | NaPS⁵ | 9g | 9g |
| K | H₂O¹ | 27g | 33.8g |

| | | | |
|---|---|---|---|
| ⁽¹⁾ Deionized water ⁽²⁾ SHP is at 45% solids in water. ⁽³⁾ Dissolved with F. ⁽⁴⁾ SHP diluted with I. ⁽⁵⁾ Dissolved with | | | |

**Table 1.2 - Polymer Characterization for Examples 1-2**

| | Example 1 | Example 2 |
|---|---|---|
| Aqueous GPC | | |
| Mn | 2165 | 1650 |
| Mw | 7851 | 5203 |
| % Solids | 50% | 49.6% |
| Conversion | 98% | 98% |

### COMPARATIVE EXAMPLES A-D. Preparation of curable compositions

Poly (AA/HEA) copolymerizations were carried out in a 5 liter flask equipped with a mechanical stirrer, thermocouple, condenser, nitrogen inlet line and reagent co-feed lines. Solutions of E,G and I were prepared by adding the H₂O of F,H and J respectively. Ingredients C and D were poured into a plastic coated jar and agitated on a magnetic stir-plate. Ingredients A and B were charged to the kettle and the temperature increased to 72 °C under nitrogen. After the desired temperature was achieved, solutions of E+F, G+H and mixture of C+D were co-fed (Feed times: E+F = 110 min, G+H = 122 min, C+D = 120 min). The reaction temperature was maintained at 72 °C during the course of the polymerization. After the feeds were over, the temperature was held at 72 °C for 10 minutes. The reaction was then cooled to 60 °C at which temperature the solution of I+J was added to it. The reaction temperature was held steady at 60 °C for 20 min after which it was cooled to room temperature. Characterization involved molecular weight determination through Gel Permeation Chromatography, residual acids by HPLC, and % solids/conversion.

**Table A.1- Polymerization Ingredients for Comparative Examples A-D**

| | Ingredient | Comp. Ex. A | Comp. Ex. B | Comp. Ex. C | Comp. Ex. D |
|---|---|---|---|---|---|
| A | Kettle H₂O | 1200 | 1200 | 1200 | 1200 |
| B | FeSO₄ (1.5% soln. in H₂O) | 30 | 30 | 30 | 30 |
| C | AA | 500 | 350 | 500 | 350 |
| D | HEA | 500 | 650 | 500 | 650 |
| E | SMBS | 25 | 25 | 70 | 70 |
| F | Dilution H₂O for SMBS | 200 | 200 | 200 | 200 |
| G | NaPS powder | 3.2 | 3.2 | 9 | 9 |
| H | Dilution H₂O for NaPS | 100 | 100 | 100 | 100 |
| I | NaPS powder | 1.5 | 1.5 | 1.5 | 1.5 |
| J | Dilution H₂O for NaPS | 50 | 50 | 50 | 50 |

**Table A.2 Polymer Characterization for Comparative Examples A-D**

| | Comp. Ex. A | Comp. Ex. B | Comp. Ex. C | Comp. Ex. D |
|---|---|---|---|---|
| Aq. GPC (Mw) | 23187 | 21638 | 5712 | 4236 |
| % Solids | 38.4 | 38.7 | 39.8 | 39.7 |
| % Conversion | >99 | >99 | >99 | >99 |

### EXAMPLE 3. Preparation of curable composition

Polymerization apparatus used was a 5 liter flask equipped with a mechanical stirrer, thermocouple, condenser, nitrogen inlet line and reagent co-feed lines. Ingredients A and B were added to the flask and heated to 50 °C under Nitrogen. After all of the ingredient A was dissolved, ingredient F was slowly added to the flask over 30 min and the resulting exotherm noted. The jar containing F was rinsed with DI H₂O G and added to the reaction flask as well. The temperature was then increased to 86 °C. Ingredient H was added and the temperature was held at 86 °C for 5 minutes. A solution of I was prepared by mixing it with dilution water J. Also, ingredients C and D were mixed together in a plastic coated jar using a magnetic stirrer. The mixtures of I+J and C+D were co-fed to the reaction flask for 125 and 120 minutes respectively. The temperature was maintained at 86 °C during the course of the polymerization. When the feeds ended rinse water E was added after which the reaction temperature was held at 86 °C for 30 minutes. It was subsequently cooled to room temperature. Characterization involved molecular weight determination through Gel Permeation Chromatography, and % solids/conversion.

**Table 3.1- Polymerization Ingredients for Example 3**

| | Ingredient | Example 3 |
|---|---|---|
| A | MAn | 170 |
| B | DI H₂O | 500 |
| C | AA | 430 |
| D | Allyl-OOP | 200 |
| E | Rinse water | 30 |
| F | NaOH (50% solution) | 137.93 |
| G | DI H₂O | 30 |
| H | SHP (45% solution) | 453.33 |
| I | NaPS | 10 |
| J | DI H₂O | 100 |

**Table 3.2 - Polymer Characterization for Example 3**

| | Example 3 |
|---|---|
| Aq. GPC (Mw) | 763 |
| % Solids | 51.56 |
| % Conversion | >99 |

### EXAMPLE 4 - Treatment of Glass Microfiber Filter Paper and Tensile Testing of Treated Substrate

Aqueous curable compositions were prepared with various amounts of TEA, SHP and H₂SO₄(Table 4.1) and diluted with water to 5% solids. Glass microfiber filter paper sheets (20.3 x 25.4 cm, Cat No. 1820 866, Whatman International Ltd., Maidstone, England) were dipped in binder solution and run through a roll padder with roll pressures of 10 lbs. The coated sheets were then heated at 90 °C for 90 sec in a Mathis oven. Post drying weight was determined to calculate binder add-on (dry binder weight as a percentage of filter paper weight.) Dried sheets were then cured in a Mathis oven at specified times and temperatures.

The cured sheets were cut into 1 inch (cross machine direction) by 4 inch (machine direction) strips and tested for tensile strength in the machine direction in a Thwing-Albert Intelect 500 tensile tester. The fixture gap was 2 inches and the pull rate was 2 inches/minute. Strips were tested either "as is" (dry tensile) or immediately after a 10 or 30 minute soak in water at 85 °C (10 min and 30 min wet tensile, respectively.) Tensile strengths were recorded as the peak force measured during parting (Table 4.2). Data reported are averages of seven test strips (except for 10 min wet tensiles, which are averages of 14 strips.)

**Table 4.1- Sample Formulations**

| Sample | Polymer | Acid (g) | TEA¹ (g) | SHP² (g) | H₂SO₄³ (g) |
|---|---|---|---|---|---|
| A1 | Example 1 | 85 | 3 | 3 | 0 |
| B1 | Example 1 | 85 | 1.5 | 3 | 0 |
| C1 | Example 1 | 85 | 3 | 3 | 2.4 |
| D1 | Example 1 | 59.5 | 0 | 2.1 | 2.1 |
| E1 | Example 2 | 59.5 | 2.1 | 2.1 | 1.68 |
| F1 | Example 2 | 59.5 | 0 | 2.1 | 0 |
| G1 | Example 2 | 59.5 | 1.05 | 2.1 | 0 |
| H1 | Example 2 | 59.5 | 0 | 2.1 | 1.68 |
| I1 | Example 2 | 59.5 | 1.05 | 2.1 | 1.68 |
| J1 | Comp. Ex. C | 98 | 0 | 3 | 0 |
| K1 | Comp. Ex. C | 98 | 4.5 | 3 | 0 |
| L1 | Comp. Ex. D | 98 | 0 | 3 | 0 |
| M1 | Comp. Ex. D | 98 | 2.3 | 3 | 0 |

| | | | | | |
|---|---|---|---|---|---|
| ¹>99% solids ² 45% solids ³ 93% solids | | | | | |

**Table 4.2 - Tensile Strengths of Treated Glass Microfiber Filter Paper**

| | Cure | Tensile Strength (lbf) after 30 sec cure | | | | Tensile Strength (lbf) after 60 sec cure | | | |
|---|---|---|---|---|---|---|---|---|---|
| Sample | Temp | dry | 10 min wet | 30 min wet | add-on | dry | 10 min wet | 30 min wet | add-on |
| A1 | 210 | 8.9 | 9.0 | 6.3 | 11.1% | 11.3 | 8.7 | 7.2 | 11.6% |
| | 190 | 9.3 | 3.8 | 2.9 | 11.1% | 11.1 | 5.6 | 4.0 | 11.1% |
| B1 | 210 | 9.4 | 8.0 | 6.8 | 10.1% | 9.8 | 8.5 | 7.1 | 10.5% |
| | | 10. | | | | | | | |
| | 190 | 3 | 3.9 | 2.4 | 10.9% | 10.8 | 5.6 | 4.1 | 10.9% |
| | | 10. | | | | | | | |
| C1 | 210 | 2 | 8.4 | 6.4 | 10.2% | 5.9 | 8.2 | 7.6 | 10.7% |
| | 190 | 9.5 | 3.7 | 3.6 | 11.3% | 10.8 | 5.9 | 4.6 | 11.3% |
| | | 10. | | | | | | | |
| D1 | 190 | 8 | 3.4 | 2.2 | 10.9% | 10.4 | 4.8 | 4.5 | 11.2% |
| | | 10. | | | | | | | |
| E1 | 190 | 6 | 4.7 | 3.6 | 11.5% | 10.4 | 6.1 | 5.6 | 11.5% |
| | | 10. | | | | | | | |
| F1 | 190 | 3 | 4.7 | 2.6 | 11.1% | 9.6 | 6.3 | 5.2 | 10.7% |
| | | 10. | | | | | | | |
| G1 | 190 | 7 | 4.7 | 3.8 | 11.1% | 10.2 | 6.2 | 5.1 | 10.7% |
| H1 | 190 | 9.1 | 4.1 | 3.0 | 11.3% | 9.8 | 5.7 | 5.8 | 11.5% |
| I1 | 190 | 9.2 | 4.5 | 3.3 | 11.0% | 10.1 | 5.9 | 5.3 | 11.1% |
| | | 12. | | | | | | | |
| J1 | 210 | 2 | 5.1 | 2.8 | 11.8% | 12.6 | 6.6 | 4.8 | 12.3% |
| | | 11. | | | | | | | |
| K1 | 210 | 5 | 3.9 | 3.2 | 10.9% | 12.3 | 5.8 | 4.6 | 11.2% |
| | | 10. | | | | | | | |
| L1 | 210 | 3 | 4.6 | 2.7 | 11.0% | 11.0 | 6.5 | 4.3 | 11.6% |
| | | 12. | | | | | | | |
| M1 | 210 | 9 | 5.5 | 2.1 | 12.7% | 11.7 | 6.2 | 4.8 | 12.8% |

Wet tensile strength of a curable composition-treated glass microfiber filter paper which is a substantial fraction of dry tensile strength of a similarly treated glass microfiber filter paper is taken herein to indicate that a composition has cured, and that useful high temperature performance of the cured aqueous composition-treated glass microfiber filter paper results. Examples A1, B1, and C1 of the present invention cured at 210 °C exhibit superior cured properties (wet tensile strengths) relative to Comparative Examples J1, K1, L1, and M1, also cured at 210 °C. Examples A1-I1 of the present invention show useful levels of cured properties when cured at 190 °C.

## Claims

1. A curable composition comprising
a polymer comprising, as copolymerized units, a monomer comprising carboxylic acid groups, anhydride groups, or salts thereof, and a hydroxyl group-comprising monomer of Formula I,
CH₂=C(R1)CH(R2)OR3 (I)
wherein R1 and R2 are independently selected from hydrogen, methyl, and - CH₂OH; and R3 is selected from hydrogen, -CH₂CH(CH₃)OH, -CH₂CH₂OH and (C3-C12) polyol residues; or of Formula II, 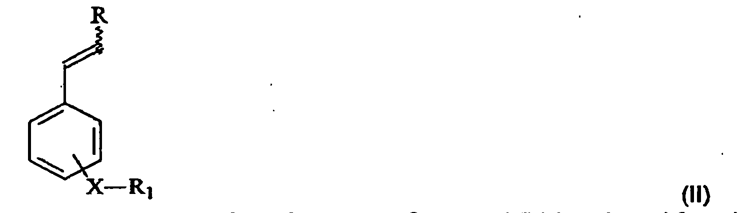 wherein R is selected from CH₃, Cl, Br, and C₆H₅; and R1 is selected from H, OH, CH₂OH, CH(CH₃)OH, glycidyl, CH(OH)CH₂OH, and (C3-C12)polyol residues;
wherein the ratio of the number of equivalents of said carboxylic acid groups, anhydride groups, or salts thereof to the number of equivalents of said hydroxyl groups is from about 1/0.01 to about 1/3, and wherein said carboxylic acid groups, anhydride groups, or salts thereof are neutralized to an extent of less than about 35% with a fixed base
and wherein the curable composition additionally contains components chosen from polyols which are not polymers as defined above, emulsifiers, surfactants, organosilanes, corrosion inhibitors effective at pH <4 and waxes.

2. The curable composition of claim 1 wherein said polymer comprises, as copolymerized units, from 10% to 90% by weight, based on the weight of said polymer, of said monomer comprising carboxylic acid groups, anhydride groups, or salts thereof, and from 90% to 10% by weight, based on the weight of said polymer, of said hydroxyl group-comprising monomer.

3. The curable composition of claim 1 or claim 2 wherein said hydroxyl group-comprising monomer is allyl alcohol or 3-allyloxy-1,2-propanediol.

4. The curable composition of claim 1 or claim 2 wherein said composition comprises said polyol.

5. The curable composition of claim 2 wherein said composition further comprises a Phosphorous-containing species.

6. A method for treating a substrate comprising:
(a) forming the curable composition of claim 1;
(b) contacting said substrate with said curable composition; and
(c) heating said curable composition at temperature of from 100°C to 400 °C.

7. A substrate bearing the cured composition of claim 1.

8. The curable composition as claimed in claim 4, wherein the polyol is an alkanolamine.

## Patentansprüche

1. Härtbare Zusammensetzung, umfassend ein Polymer, welches als copolymerisierte Einheiten ein Monomer, umfassend Carbonsäuregruppen, Anhydridgruppen oder deren Salze, und ein Hydroxylgruppen-umfassendes Monomer der Formel I,
CH₂=C(R1)CH(R2)OR3 (I)
wobei R1 und R2 unabhängig aus Wasserstoff, Methyl und -CH₂OH ausgewählt sind, und R3 aus Wasserstoff, -CH₂CH(CH₃)OH, -CH₂CH₂OH und (C3-C12) Polyolresten ausgewählt ist,
oder der Formel II umfaßt, 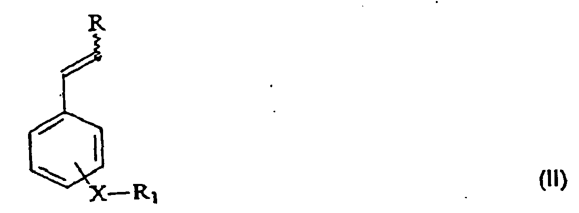 wobei R aus CH₃, Cl, Br und C₆H₅ ausgewählt ist, und R1 aus H, OH, CH₂OH, CH(CH₃)OH, Glycidyl, CH(OH)CH₂OH und (C3-C12)-Polyolresten ausgewählt ist,
wobei das Verhältnis der Anzahl an Äquivalenten der Carbonsäuregruppen, Anhydridgruppen oder deren Salze zu der Anzahl an Äquivalenten der Hydroxylgruppen von etwa 1/0,01 bis etwa 1/3 beträgt, und wobei die Carbonsäuregruppen, Anhydridgruppen oder deren Salze zu einem Ausmaß von weniger als etwa 35% mit einer festen bzw. fixierten Base neutralisiert sind,
und wobei die härtbare Zusammensetzung zusätzlich Komponenten, ausgewählt aus Polyolen, welche nicht die vorstehend definierten Polymere sind, Emulgatoren, grenzflächenaktiven Mitteln, Organosilanen, bei pH <4 wirksamen Korrosionsinhibitoren und Wachsen, enthält.

2. Härtbare Zusammensetzung nach Anspruch 1, wobei das Polymer als copolymerisierte Einheiten von 10 bis 90 Gew.-%, bezogen auf das Gewicht des Polymers, des Monomers, welches Carbonsäurengruppen, Anhydridgruppen oder deren Salze umfaßt, und von 90% bis 10% Gew.-%, bezogen auf das Gewicht des Polymers, des Hydroxylgruppen-umfassenden Monomers umfaßt.

3. Härtbare Zusammensetzung nach Anspruch 1 oder Anspruch 2, wobei das Hydroxylgruppen-umfassende Monomer Allylalkohol oder 3-Allyloxy-1,2-propandiol ist.

4. Härtbare Zusammensetzung nach Anspruch 1 oder Anspruch 2, wobei die Zusammensetzung das Polyol umfaßt.

5. Härtbare Zusammensetzung nach Anspruch 2, wobei die Zusammensetzung weiter eine Phosphor-haltige Spezies umfaßt.

6. Verfahren zum Behandeln eines Substrats, umfassend
(a) das Bilden der härtbaren Zusammensetzung nach Anspruch 1,
(b) das Inkontaktbringen des Substrates mit der härtbaren Zusammensetzung und
(c) das Erwärmen der härtbaren Zusammensetzung bei einer Temperatur von 100°C bis 400°C.

7. Substrat, welches die gehärtete Zusammensetzung nach Anspruch 1 trägt.

8. Härtbare Zusammensetzung nach Anspruch 4, wobei das Polyol ein Alkanolamin ist.

## Revendications

1. Composition durcissable comprenant
un polymère comprenant, en tant qu'unités copolymérisées, un monomère comprenant des groupes acides carboxyliques, groupes anhydrides, ou sels de ceux-ci, et un monomère comprenant un groupe hydroxyle répondant à la formule I,
CH₂=C(R1)CH(R2)OR3 (I)
dans laquelle R1 et R2 sont indépendamment choisis parmi un atome d'hydrogène, un groupe méthyle, et -CH₂OH ; et R3 est choisi parmi un atome d'hydrogène, -CH₂CH(CH₃)OH, - CH₂CH₂OH et des résidus polyols en C3 à C12 ; ou répondant à la formule II, 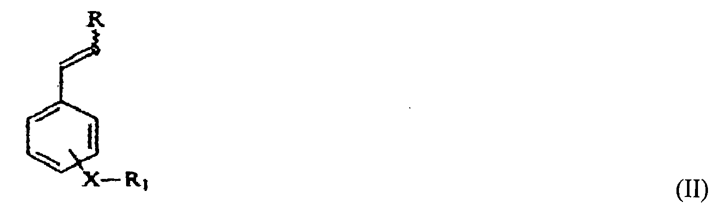 dans laquelle R est choisi parmi un groupe CH₃, Cl, Br et C₆H₅; et R1 est choisi parmi un groupe H, OH, CH₂OH, CH(CH₃)OH, glycidyle, CH(OH)CH₂OH, et des résidus polyols en C3àC12;
dans laquelle le rapport du nombre des équivalents desdits groupes acides carboxyliques, groupes anhydrides, ou sels de ceux-ci sur le nombre des équivalents desdits groupes d'hydroxyle est d'environ 1/0,01 à environ 1/3, et dans laquelle lesdits groupes acides carboxyliques, groupes anhydrides, ou sels de ceux-ci sont neutralisés à une hauteur de moins d'environ 35 % avec une base fixe ;
et dans laquelle la composition durcissable contient de plus des composants choisis parmi des polyols qui ne sont pas des polymères tels que définis ci-dessus, des émulsifiants, des agents tensioactifs, des organosilanes, des inhibiteurs de corrosion efficaces à pH < 4 et des cires.

2. Composition durcissable selon la revendication 1, dans laquelle ledit polymère comprend, en tant qu'unités copolymérisées, de 10 % à 90 % en poids, sur la base du poids dudit polymère, dudit monomère comprenant des groupes acides carboxyliques, groupes anhydrides ou sels de ceux-ci, et de 90 % à 10 % en poids sur la base du poids dudit polymère, dudit monomère comprenant un groupe hydroxyle.

3. Composition durcissable selon la revendication 1 ou la revendication 2, dans laquelle ledit monomère comprenant un groupe hydroxyle tel alcool allylique ou le 3-allyloxique-1,2-propanediol.

4. Composition durcissable selon la revendication 1 ou la revendication 2, dans laquelle ladite composition comprend ledit polyol.

5. Composition durcissable selon la revendication 2, dans laquelle ladite composition comprend en outre une espèce contenant un atome de phosphore.

6. Procédé de traitement d'un substrat comprenant les étapes consistant à :
(a) former la composition durcissable selon la revendication 1 ;
(b) mettre en contact ledit substrat avec ladite composition durcissable ; et
(c) chauffer ladite composition durcissable à une température allant de 100°C à 400°C.

7. Substrat portant la composition durcissable selon la revendication 1.

8. Composition durcissable selon la revendication 4, dans laquelle le polyol est une alcanolamine.
